# FASCICULE DE BREVET EUROPEEN

(11) **EP 2 303 477 B1**
(45) Date de publication et mention de la délivrance du brevet: **17.01.2018**
(21) Numéro de dépôt: 09784420.3
(22) Date de dépôt: 22.06.2009
(51) Int. Cl.: B08B 5/02, B08B 9/00, B08B 9/093, B08B 15/02, B65G 69/18

(54) **DISPOSITIF DE DÉPOUSSIÉRAGE, DANS LE CADRE DE TRANSFERT DE PRODUITS PULVÉRULENTS, INSTALLATION, ET PROCÉDÉS UTILISANT LEDIT DISPOSITIF**
STAUBABZIEHER FÜR DIE ÜBERTRAGUNG PULVERFÖRMIGER PRODUKTE, ANLAGE, UND VERFAHREN ZUR VERWENDUNG DIESER VORRICHTUNG
DUST EXTRACTOR, IN THE CONTEXT OF THE TRANSFER OF POWDERY PRODUCTS, INSTALLATION, AND METHODS OF USING SAID DEVICE

(30) Priorité: 23.06.2008 FR 0854131
(43) Date de publication de la demande: 06.04.2011
(73) Titulaire: NOMINOE SA, 1950 Sion (CH); HEMOGAM sagl, 6900 Lugano (CH)
(72) Inventeur: ROLIN, François, F-78730 Saint Arnoult En Yvelines (FR)
(74) Mandataire: Hubert, Philippe
(86) Numéro de dépôt international: PCT/FR2009/051192
(87) Numéro de publication internationale: WO 2010/007288

(56) Documents cités:
- EP-A- 1 561 521
- WO-A-2005/056443
- DE-U- 1 893 075
- FR-A- 2 770 426
- FR-A- 2 779 668
- GB-A- 1 286 727

## Description

La présente invention concerne essentiellement un dispositif de dépoussiérage, dans le cadre de transfert de produits pulvérulents, une installation comportant ledit dispositif, ainsi qu'un procédé de dépoussiérage, un procédé de transfert d'au moins un produit pulvérulent, et un procédé de stérilisation utilisant ledit dispositif.

### ETAT DE LA TECHNIQUE

Il est connu que le transfert de produits à fort caractère adhérent, tels que les produits pulvérulents, utilisant des moyens tels que des contenants, des conduits ou analogues, fait intervenir la nécessité de nettoyer régulièrement les parois internes de ces moyens de transfert, en raison de dépôts et autres agglomérats susceptibles de s'y former.

Habituellement, ce type de problème nécessite le démontage un à un des divers éléments ayant servi au cours du transfert afin de les nettoyer par une méthode classique. Mais cette technique présente des inconvénients, en particulier lorsque le confinement du produit transféré est nécessaire, étant donné que le nettoyage manuel ne permet pas facilement de respecter ces conditions de confinement, à moins de mettre en place un équipement spécifique lourd, coûteux et qui rallonge la durée de l'opération de nettoyage.

Dans l'état de la technique, il a été proposé très peu de systèmes de nettoyage appliqués aux contenants notamment de produits pulvérulents, et pouvant fonctionner en particulier en milieu confiné. On peut citer notamment le brevet français N° 2 770 426, qui propose un dispositif selon le préambule de la revendication 1, et un procédé de nettoyage des parois d'une cavité, consistant à disposer dans la cavité au moins une buse flexible allongée, immobilisée d'un côté sur la paroi de la cavité et libre de mouvements de l'autre côté, qui est alimentée par un fluide sous pression, et ainsi se déplace aléatoirement au sein de la cavité du côté de sa partie libre de mouvements en projetant un jet de fluide sur les parois de la cavité, ce qui permet le nettoyage de surface desdites parois.

Il subsiste cependant avec ce dispositif la nécessité de nettoyer ensuite la buse flexible qui a été introduite dans la cavité, notamment autour de sa base immobilisée sur la paroi de ladite cavité, qui est susceptible d'être un lieu privilégié de formation de dépôt de matière, et qui rompt le confinement dans le cas où les buses sont démontées pendant le transfert.

Il est également connu par le document GB 1 286 727 un dispositif de fluidification de matériaux solides pulvérulents d'une trémie afin de réaliser un démottage, ce qui nécessite d'envoyer de l'air sous pression en direction de la sortie unique située à la base de la trémie.

Ce dispositif ne permet pas de résoudre les problèmes techniques à la base de l'invention définis ci-après. En outre, la structure décrite dans ce document est différente du dispositif de l'invention tel que défini par les revendications, et qui comprend notamment un conduit d'évacuation propre latéral du fluide, qui est indispensable dans la mesure où le dispositif de dépoussiérage selon l'invention est un dispositif de transfert entre deux récipients confinés donc fermés de manière étanche, ce qui est rendu nécessaire par le transfert de matières pharmaceutiques, cosmétiques ou agroalimentaires, pour lesquelles il faut éviter toute contamination de produit par l'environnement ou des traces de produits précédemment transférés via le même dispositif.

Enfin, le document EP 1 561 521 est relatif à un dispositif pour prévenir l'accumulation de produits indésirables, par nettoyage avec un fluide approprié à ces produits, ledit fluide étant projeté par un jet continu, au travers d'un élément annulaire (935) pourvus uniquement d'orifices d'entrée de fluide. Ce dispositif ne prévoit pas d'évacuation de fluide dans la paroi latérale, indispensable dans le cadre du dépoussiérage d'une cavité fermée.

### BUTS DE L'INVENTION

La présente invention a ainsi pour but principal de fournir un nouveau dispositif de dépoussiérage, dans le cadre de transferts de produits pulvérulents, permettant le nettoyage de la paroi interne dudit dispositif, ainsi que les parties en amont et en aval de celui-ci, apte à fonctionner en respectant les exigences de confinement strictes, notamment dans le cadre de l'utilisation du produit pulvérulent transféré dans la formulation de produits pharmaceutiques, cosmétiques ou agroalimentaires, afin d'éviter toute contamination de produit par l'environnement ou des traces de produits précédemment transférés via le même dispositif.

La présente invention a encore pour but de résoudre le problème technique posé de manière particulièrement simple, avec un coût suffisamment faible, par rapport aux solutions de l'état de la technique antérieure, permettant la fourniture d'un dispositif pouvant être à usage unique, cette solution étant utilisable à l'échelle industrielle et pharmaceutique de manière sûre et fiable.

La présente invention a également pour but de fournir une installation incorporant ledit dispositif, ainsi que d'une part un procédé de dépoussiérage utilisant ledit dispositif, d'autre part un procédé de transfert de produits pulvérulents comportant ledit dispositif en tant que moyen de liaison entre deux contenants, et enfin un procédé de stérilisation s'appliquant audit dispositif ou à ladite installation.

### RESUME DE L'INVENTION

Un premier objet de la présente invention porte sur un dispositif de dépoussiérage selon la revendication 1. L'utilisation dudit dispositif peut être effectuée en particulier après une opération de transfert, c'est-à-dire le vidage complet d'un contenant dans un autre contenant, afin d'éliminer toute trace du produit venant d'être transféré, et ainsi d'éviter toute contamination d'un produit par un autre produit précédemment transféré via le même dispositif.

Selon un mode de réalisation préféré, le connecteur creux est connecté à un premier manchon creux souple et écrasable, de jonction entre le premier contenant et l'extrémité supérieure ouverte, et à un second manchon creux souple et écrasable, de jonction entre le second contenant et l'extrémité inférieure ouverte, afin de permettre un confinement fermé d'un volume réduit par écrasement du premier manchon et du second manchon lors d'opérations de nettoyage ou dépoussiérage.

Selon une variante de réalisation particulièrement avantageuse, certains desdits conduits d'arrivée débouchent sur la paroi interne dudit connecteur selon une orientation tangentielle à ladite paroi.

Selon un mode de réalisation, certains desdits conduits d'arrivée de fluide orientés tangentiellement sont, indépendamment ou en combinaison, orientés :
- vers le haut, avec un angle θ₁ compris strictement entre 0° et 90° par rapport au plan dudit connecteur, défini par le plan de l'extrémité supérieure ouverte, les valeurs limites θ₁=0° et θ₁=90° étant exclues ;
- vers le bas, avec un angle θ₁ compris strictement entre 0° et 90° par rapport au plan dudit connecteur, les valeurs limites θ₁=0° et θ₁=90° étant exclues.

Selon un autre mode de réalisation, certains desdits conduits d'arrivée de fluide orientés tangentiellement sont, indépendamment ou en combinaison, orientés :
- vers le haut, avec un angle θ₁ compris entre 20° et 60° par rapport au plan dudit connecteur, défini par le plan de l'extrémité supérieure ouverte ;
- vers le bas, avec un angle θ₁ compris entre 20° et 60° par rapport au plan dudit connecteur.

Selon encore un autre mode de réalisation, certains desdits conduits d'arrivée de fluide orientés tangentiellement sont, indépendamment ou en combinaison, orientés :
- vers le haut, avec un angle θ₂ compris entre 0° et 90° de part et d'autre du plan de coupe défini par l'axe de révolution dudit connecteur et l'axe parallèle audit axe de révolution passant par le bord de l'orifice du conduit considéré ;
- vers le bas, avec un angle θ₂ compris entre 0° et 90° de part et d'autre du plan de coupe défini par l'axe de révolution dudit connecteur et l'axe parallèle audit axe de révolution passant par le bord de l'orifice du conduit considéré.

Enfin, selon un autre mode de réalisation, certains desdits conduits d'arrivée de fluide orientés tangentiellement sont orientés sensiblement dans le plan dudit connecteur, soit avec un angle θ₁=0° et un angle θ₂=90° d'un côté ou de l'autre du plan de coupe défini par l'axe de révolution dudit connecteur et l'axe parallèle audit axe de révolution passant par le bord de l'orifice du conduit considéré.

Les modes de réalisation définis ci-dessus sont considérés comme pouvant être pris indépendamment ou en combinaison les uns avec les autres. En effet, l'arrangement desdits conduits entre eux peut être réalisé de toutes les manières possibles, tant que lesdits conduits visent bien les parois nécessitant d'être dépoussiérées.

De manière préférée et particulièrement avantageuse, lesdits conduits d'arrivée du fluide sont arrangés autour dudit connecteur de façon antisymétrique par rapport à l'axe de révolution dudit connecteur, pour permettre l'obtention d'une dynamique du flux cyclonique optimale, et ainsi permettre un dépoussiérage optimal des parois visées.

Selon l'invention, ledit fluide peut être tout liquide ou gaz permettant de nettoyer par un simple dépoussiérage mécanique, ou encore par voie de solubilisation, toutes traces de produit pulvérulent restant sur les parois dudit dispositif. Ledit flux de fluide sous pression alimentant lesdits conduits d'arrivée de fluide peut être un flux de fluide sous haute pression, de préférence sous une pression supérieure à 300 kPa.

En particulier, ledit flux de fluide peut être fourni auxdits conduits d'arrivée de fluide au moyen d'une pompe ou d'un compresseur situé en amont dudit connecteur.

Selon une variante particulière, ledit au moins un conduit d'évacuation de fluide est orienté sensiblement dans ou parallèlement au plan formé par ledit connecteur.

Selon l'invention, ledit conduit d'évacuation de fluide est situé sur tout endroit de la surface constituée par la paroi latérale dudit connecteur, et de manière particulièrement préférée ledit conduit d'évacuation est situé sur un point de la circonférence située à la mi-hauteur dudit connecteur, cette position privilégiée permettant une meilleure répartition du fluide, et ainsi un dépoussiérage optimal des parois situées en amont et en aval dudit connecteur.

Selon l'invention, en particulier, ledit connecteur peut présenter une paroi interne sensiblement cylindrique.

Selon une variante de réalisation, ledit connecteur est muni d'un système de fermeture dans son(ses) extrémité(s) supérieure et/ou inférieure, permettant la connexion étanche entre deux contenants.

Selon un mode de réalisation particulier, ledit système de fermeture est le soudage dudit connecteur dans son extrémité supérieure ou inférieure audit contenant ou situé en amont dudit connecteur, permettant ainsi la prévision d'un ensemble complet comprenant un contenant et un connecteur qui lui est soudé, prêt à l'emploi.

Selon un autre mode de réalisation particulier, ledit système de fermeture est un moyen de fermeture mécanique tel qu'un moyen de serrage extérieur, par exemple une bague, un cerflex ou encore un clamp, ledit système étant rendu étanche par l'ajout d'un joint d'étanchéité placé entre la surface constituée par une desdites extrémités dudit connecteur et la surface constituée par l'extrémité de l'ouverture dudit contenant. Ledit contenant peut être tout réacteur ou fût susceptible de contenir au moins un produit pulvérulent.

En particulier, ledit contenant peut être un manchon ou une poche en plastique.

Selon l'invention, en particulier, ledit connecteur peut être réalisé en matière plastique, de préférence en polyéthylène ou polypropylène. Ledit connecteur présente ainsi, dans un mode de réalisation particulièrement préféré, un caractère jetable.

Selon une variante de réalisation, ledit connecteur peut être fabriqué en tout ou partie par moulage.

Selon une variante de réalisation particulière, ledit connecteur peut être constitué d'une gaine souple, sur laquelle lesdits conduits d'arrivée et d'évacuation de fluide sont greffés, notamment par soudage et/ou perçage dudit connecteur.

Ainsi, ledit connecteur peut avantageusement s'adapter de manière aisée à tout diamètre, selon les diamètres respectifs des extrémités des contenants qui lui sont reliés.

Un second objet de la présente invention, selon la revendication 9, sur une installation comprenant le dispositif tel que défini précédemment, caractérisé en ce que lesdits conduits d'arrivée de fluide sont configurés pour être alimentés au moyen d'une pompe ou d'un compresseur, et en ce que ledit au moins un conduit d'évacuation de fluide peut être relié à un tuyau connecté à un système d'aspiration, laissé ouvert sur l'environnement extérieur ou encore relié au contenant final, afin de permettre par exemple la récupération du restant du produit transféré.

Selon une variante de réalisation particulière, ladite installation peut comprendre en outre, en aval de ladite pompe ou dudit compresseur, un système de deux turbines reliées par un axe, la première turbine étant entraînée par le flux d'alimentation en fluide desdits conduits d'arrivée de fluide et la seconde turbine permettant de créer un vide réalisant l'évacuation dudit fluide par ledit au moins un conduit d'évacuation de fluide. Ledit système de deux turbines peut être réalisé en matière plastique, de préférence en polyéthylène ou polypropylène. En particulier, ledit au moins un conduit d'évacuation de fluide peut être relié en outre à un filtre à poussière en amont du rejet des fluides dans l'atmosphère.

Ainsi, ladite installation peut permettre de récupérer la poudre restante initialement sur les diverses parois dudit dispositif, ce qui est particulièrement intéressant si le produit est coûteux ou encore toxique pour l'environnement.

En particulier, les dimensions dudit connecteur et desdits conduits d'arrivée et d'évacuation de fluide sont liées les unes aux autres, et proportionnelles à la taille de l'installation comprenant ledit dispositif. Selon un mode de réalisation particulier, pour un dispositif dont ledit connecteur est d'un diamètre de 100 mm, lesdits conduits d'arrivée de fluide sont d'un diamètre de 8 à 15 mm, et ledit au moins un conduit d'évacuation de fluide est d'un diamètre de 15 à 25 mm.

Un troisième objet de la présente invention, selon la revendication 10, porte sur un procédé de dépoussiérage dans le cadre de transfert de produits pulvérulents d'un premier contenant à un second contenant, caractérisé en ce qu'il comprend les étapes suivantes :
a) la provision d'un dispositif tel que défini précédemment ;
b) on réalise la connexion en amont et en aval dudit dispositif aux premier contenant et second contenant dudit produit pulvérulent ;
c) on alimente avec un flux de fluide sous pression lesdits conduits d'arrivée de fluide pour réaliser la formation d'un flux cyclonique dudit fluide au sein dudit connecteur entrainant avec lui tout produit pulvérulent, restant sur la paroi interne ou en amont ou en aval dudit connecteur ;
d) on réalise l'évacuation dudit fluide ainsi que dudit produit pulvérulent par au moins un conduit d'évacuation de fluide qui comprend en outre avantageusement un système d'aspiration connecté audit au moins un conduit d'évacuation (30) de fluide par un tuyau (41).

En particulier selon l'invention, l'étape b) peut être réalisée en connectant ledit dispositif à des manchons respectivement fixés aux premier et second contenants, et en fermant l'ouverture desdits contenants par des moyens de serrage externes, par exemple de type clamps, réalisant ainsi la fermeture des manchons par pincement. L'ensemble du dispositif muni des manchons définit ainsi un espace clos confiné. Le procédé de dépoussiérage est réalisé sous un flux de fluide sous pression alimentant lesdits conduits d'arrivée de fluide dudit dispositif qui peut être un flux de fluide sous haute pression, en particulier sous une pression supérieure à 100 kPa, de préférence sous une pression supérieure à 300 kPa.

Selon un autre mode de réalisation particulier, ladite étape d'évacuation peut comprendre en outre un filtre à poussière en amont du rejet des fluides dans l'atmosphère, connecté audit au moins un conduit d'évacuation de fluide par un tuyau.

Un quatrième objet de la présente invention, selon la revendication 12, porte sur un procédé de transfert d'au moins un produit pulvérulent caractérisé en ce qu'il comprend les étapes suivantes :
a) la provision d'un dispositif tel que défini précédemment ;
b) on réalise l'approvisionnement du premier contenant dudit au moins un produit pulvérulent à transférer ;
c) on réalise la connexion en amont dudit dispositif audit premier contenant;
d) on réalise la connexion en aval dudit dispositif au second contenant destiné à recevoir ledit au moins un produit pulvérulent transféré ;
e) on réalise le transfert dudit au moins un produit pulvérulent dudit premier contenant vers ledit second contenant.

En particulier selon l'invention, les étapes c) et d) peuvent être réalisées en connectant ledit dispositif à des manchons respectivement fixés aux premier contenant et second contenant.

Selon une première variante de réalisation, ledit dispositif prévu, comprenant lesdits conduits d'arrivée de fluide et ledit au moins un conduit d'évacuation de fluide, ne comporte aucune alimentation en fluide desdits conduits au cours du transfert dudit au moins un produit pulvérulent.

Selon une seconde variante de réalisation, ledit procédé comporte en outre une étape d'alimentation en fluide desdits conduits d'arrivée de fluide dudit dispositif par un flux de fluide sous pression, ledit au moins un conduit d'évacuation restant de préférence fermé pendant toute l'opération de dépoussiérage. Ledit flux de fluide sous pression alimentant lesdits conduits d'arrivée de fluide peut être un flux de fluide sous basse pression, de préférence sous une pression comprise entre 10 kPa et 100 kPa, permettant de créer un anneau dudit fluide au sein dudit connecteur pendant le transfert dudit au moins un produit pulvérulent. Ledit second contenant destiné à recevoir ledit au moins un produit pulvérulent transféré peut être réalisé en un matériau perméable au fluide alimentant lesdits conduits, et imperméable audit au moins un produit pulvérulent transféré, ces propriétés émanant soit de la matière dudit contenant final, soit du fait de micropores aux diamètres adaptés.

En outre, avantageusement, ledit procédé peut comprendre en outre une étape utilisant le procédé de dépoussiérage dudit dispositif tel que défini précédemment.

Ainsi, lors du dépoussiérage les deux manchons sont fermés par un système de pince permettant de délimiter une cavité étanche autour du dispositif. Lors du transfert de poudre, les pinces sont alors retirées laissant libre passage à la poudre.

Un dernier objet de la présente invention, selon la revendication 17, porte sur un procédé de stérilisation utilisant un dispositif ou une installation tel(le) que défini(e) précédemment, caractérisé en ce qu'il comprend l'alimentation desdits conduits d'arrivée de fluide dudit dispositif par un flux sous pression d'un fluide permettant de stériliser l'ensemble dudit dispositif ou de ladite installation par circulation dudit fluide au sein dudit dispositif ou de ladite installation.

En particulier, selon ce dernier objet de l'invention, ledit fluide stérilisant peut être une vapeur fluente, un gaz ou encore l'acide peracétique.

Tous les objets de la présente invention s'appliquent à tout produit pulvérulent qui peut être utilisé en particulier dans le cadre de la fabrication de produits pharmaceutiques, cosmétiques ou agroalimentaires.

D'autres buts, caractéristiques et avantages apparaissent clairement à l'homme de l'art à partir de la description suivante, faite en référence à un mode de réalisation actuellement préféré de l'invention donné simplement à titre d'illustration qui ne saurait donc en aucune façon limiter la portée de l'invention telle que définie par les revendications annexées. Par exemple, la température est donnée en degré Celsius ou bien est la température ambiante, la pression est la pression atmosphérique, et les dimensions sont données en millimètres (mm), sauf indication contraire.

### DESCRIPTION DES DESSINS

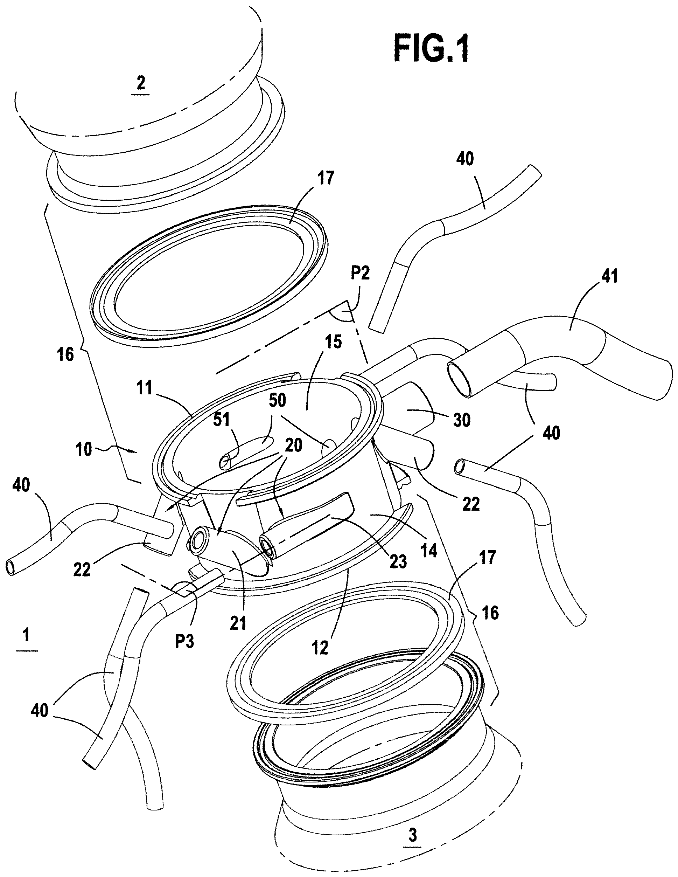

La figure 1 est une vue générale éclatée de l'un des modes de réalisation préféré du dispositif (1) selon la présente invention, comportant une représentation dudit connecteur (10) pourvu de plusieurs desdits conduits d'arrivée (20), ainsi que d'un conduit d'évacuation (30), lesdits conduits (20) étant reliés à des tuyaux (40), (41), ledit connecteur (10) étant pourvu par ailleurs en ses extrémités supérieure (11) et inférieure (12) d'un système de fermeture (16) muni d'un joint (17), permettant la connexion avec les contenants supérieur (2) et inférieur (3).

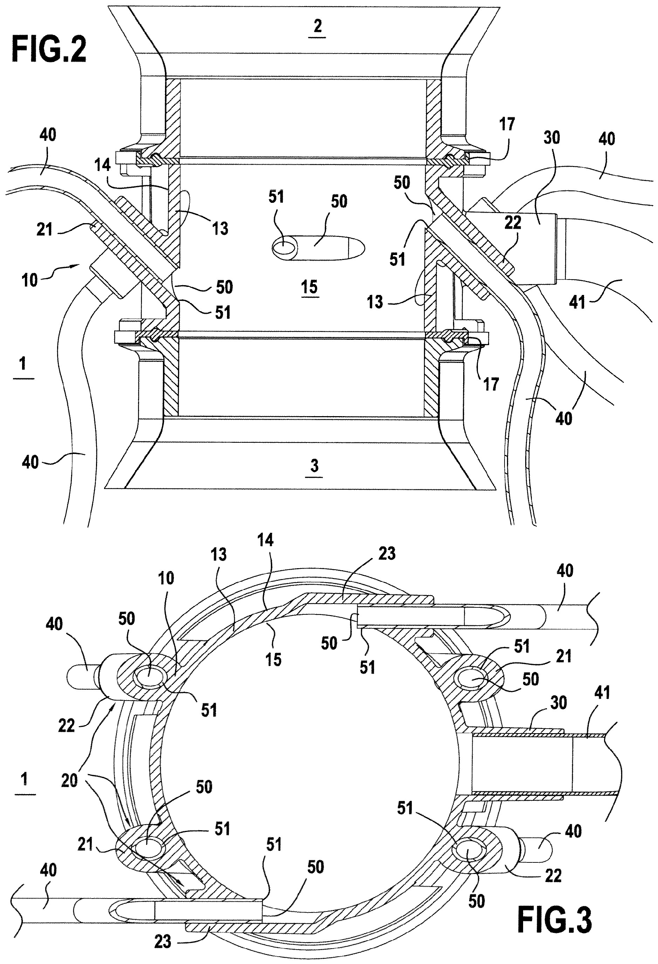

La figure 2 est une vue latérale selon le même mode de réalisation préféré dudit dispositif (1), selon le plan de coupe P₂ représenté sur la figure 1.
La figure 3 est une vue de dessus selon le même mode de réalisation préféré dudit dispositif (1), selon le plan de coupe P₃ représenté sur la figure 1.

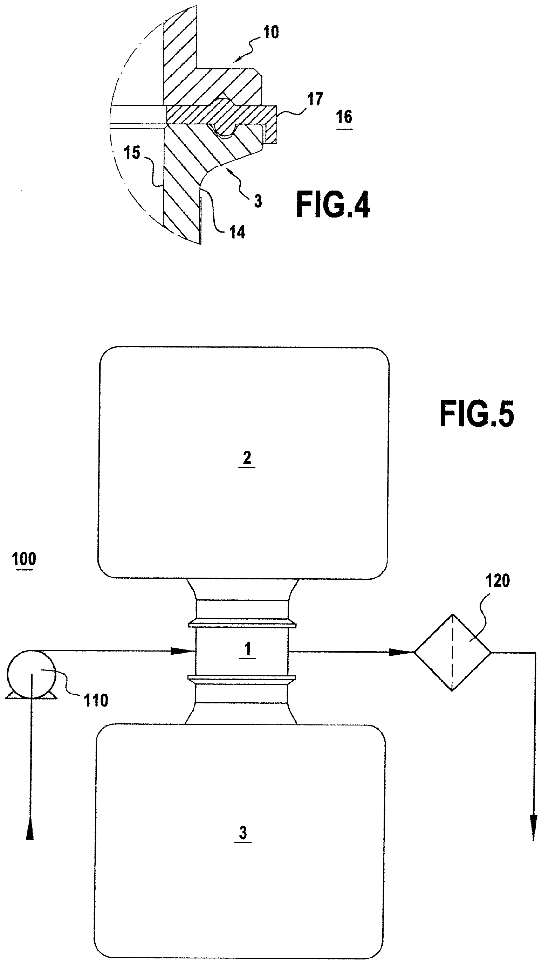

La figure 4 est un détail du système de fermeture (16) selon le même mode de réalisation préféré dudit dispositif.
La figure 5 est une représentation schématique de l'un des modes de réalisation préférée de l'installation (100) comprenant le dispositif (1) selon l'invention, comportant ledit dispositif (1) relié via un système de fermeture (16) en ses extrémités supérieure (11) et inférieure (12) à un premier contenant supérieur (2) et un second contenant inférieur (3), ledit dispositif (1) étant par ailleurs alimenté en fluide via une pompe (110), et muni d'un système d'évacuation ainsi que d'un filtre à poussière (120) permettant le rejet dudit fluide épuré.

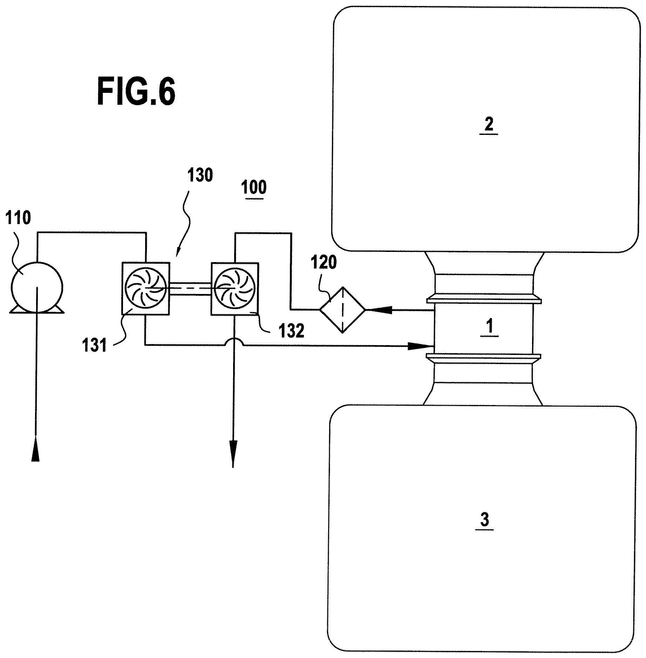

La figure 6 est une représentation schématique d'une variante de réalisation préférée de l'installation (100) comprenant le dispositif (1) selon l'invention, comportant en outre en aval de ladite pompe (100) ou dudit compresseur, un système de deux turbines (130) reliées par un axe, permettant de réaliser à la fois l'alimentation en fluide dudit dispositif (1) via sa connexion en aval de la première turbine (131), ladite première turbine (131) étant entraînée par ledit flux d'alimentation en fluide en provenance de ladite pompe (100) ou dudit compresseur, et l'évacuation dudit fluide via sa connexion en amont de la seconde turbine (132), ladite seconde turbine (132) créant un vide.

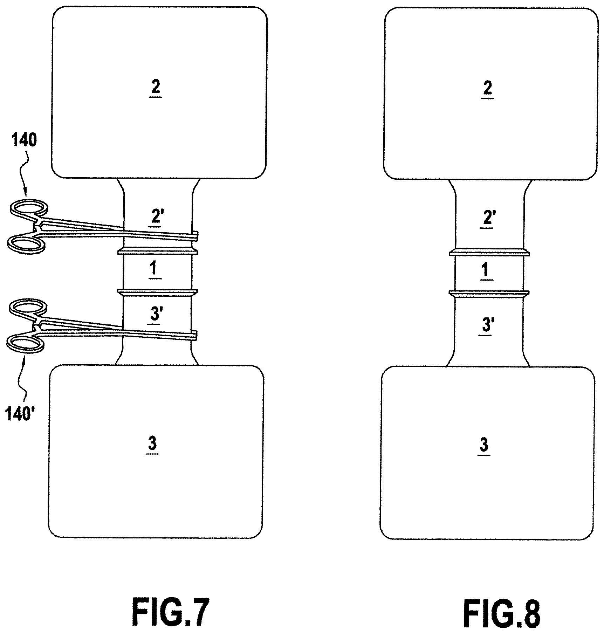

La figure 7 représente un mode de réalisation préféré de l'installation (100) comprenant le dispositif (1) selon l'invention, au cours de son fonctionnement dans le procédé de dépoussiérage selon l'invention : ledit dispositif (1) est alors connecté à des manchons souples (2') et (3') respectivement fixés aux contenants initial (2) et final (3), et deux pinces de serrage (140) et (140') sont fermées sur lesdits manchons, en amont et en aval du connecteur, ce qui définit un espace clos confiné.
La figure 8 représente un mode de réalisation préféré de l'installation (100) comprenant le dispositif (1) selon l'invention, au cours de son fonctionnement dans le procédé de transfert selon l'invention : ledit dispositif (1) est alors connecté à des manchons souples (2') et (3') respectivement fixés aux contenants initial (2) et final (3), sans pinces de serrage.

### DESCRIPTION DETAILLEE

En référence aux figures 1 à 8 annexées, et en particulier à la figure 1, l'un des modes de réalisation actuellement préféré de l'invention comprend un dispositif de dépoussiérage représenté par le numéro de référence général (1), dans le cadre de transfert de produits pulvérulents d'un contenant à un autre comprenant, comme moyen de liaison entre un premier contenant (2) et un second contenant (3) un connecteur creux (10) ayant une extrémité supérieure (11) ouverte et une extrémité inférieure (12) ouverte, comportant une paroi latérale (13) entre ses deux extrémités, ladite paroi latérale (13) définissant une paroi externe (14) et une paroi interne (15).

Ce dispositif est caractérisé en ce que ledit connecteur (10) est percé de plusieurs conduits d'arrivée (20) de fluide, reliés à des tuyaux (40) d'alimentation d'un flux de fluide sous pression et d'au moins un conduit d'évacuation (30) de fluide situé sur tout endroit de la surface constituée par la paroi latérale dudit connecteur, lesdits conduits d'arrivée (20) et d'évacuation (30) étant saillants à ladite paroi externe (14) dudit connecteur (10), et lesdits conduits d'arrivée (20) débouchant sur ladite paroi interne (15) par des orifices (50) permettant l'introduction du fluide, lesdits orifices (50) présentant une orientation les uns par rapport aux autres de façon à créer un flux cyclonique dudit fluide au sein dudit connecteur (10) entrainant avec lui tout produit pulvérulent, restant sur la paroi interne (15) ou en amont ou en aval dudit connecteur (10).

Selon une variante de réalisation particulièrement avantageuse, certains desdits conduits d'arrivée (20) débouchent sur la paroi interne (15) dudit connecteur (10) selon une orientation tangentielle à ladite paroi.

Selon le mode de réalisation actuellement préféré de l'invention, représenté sur les figures 1 à 6, ledit dispositif comprend six desdits conduits d'arrivée (20) de fluide orientés tangentiellement à ladite paroi latérale (13) de la manière suivante :
- deux desdits conduits d'arrivée (20) sont orientés vers le haut, et représentés sous la référence (21) sur la figure 1 annexée, avec un angle θ₁ compris sensiblement entre 20° et 60° par rapport au plan dudit connecteur (10), défini par le plan de l'extrémité supérieure (11) ouverte;
- deux desdits conduits d'arrivée (20) sont orientés vers le bas, et représentés sous la référence (22) sur la figure 1 annexée, avec un angle θ₁ compris sensiblement entre 20° et 60° par rapport au plan dudit connecteur (10);
- deux desdits conduits d'arrivée (20) sont orientés sensiblement dans le plan dudit connecteur (10), et représentés sous la référence (23) sur la figure 1 annexée, soit avec un angle θ₁=0° et un angle θ₂=90° d'un côté ou de l'autre du plan de coupe défini par l'axe de révolution dudit connecteur (10) et l'axe parallèle audit axe de révolution passant par le bord (51) de l'orifice (50) du conduit considéré.

En particulier, selon ce mode de réalisation de l'invention, lesdits conduits d'arrivée (20) de fluide orientés tangentiellement vers le haut ou vers le bas peuvent être orientés avec un angle θ₂ compris entre 0° et 90° de part et d'autre du plan de coupe défini par l'axe de révolution dudit connecteur (10) et l'axe parallèle audit axe de révolution passant par le bord (51) de l'orifice (50) du conduit considéré.

De manière préférée et particulièrement avantageuse, lesdits conduits d'arrivée (20) du fluide sont arrangés autour dudit connecteur (10) de façon antisymétrique par rapport à l'axe de révolution dudit connecteur (10), pour permettre l'obtention d'une dynamique du flux cyclonique optimale, et ainsi permettre un dépoussiérage optimal des parois visées.

Selon l'invention, ledit fluide peut être tout liquide ou gaz permettant de nettoyer par un simple dépoussiérage mécanique, ou encore par voie de solubilisation, tout de produit pulvérulent restant sur les parois dudit dispositif. Ledit flux de fluide sous pression alimentant lesdits conduits d'arrivée (20) de fluide peut être un flux de fluide sous haute pression, de préférence sous une pression supérieure à 300 kPa. Ledit flux de fluide peut être fourni auxdits conduits d'arrivée (20) de fluide au moyen d'une pompe (110) ou d'un compresseur situé en amont dudit connecteur (10).

Selon un mode de réalisation préféré, représenté sur les figures 1 à 8, ledit dispositif comprend un conduit d'évacuation (30) de fluide qui est orienté sensiblement dans ou parallèlement au plan formé par ledit connecteur (10), et situé sur un point de la circonférence située à la mi-hauteur dudit connecteur (10), cette position privilégiée permettant une meilleure répartition du fluide, et ainsi un dépoussiérage optimal des parois situées en amont et en aval dudit connecteur (10).

Avantageusement, ledit connecteur (10) peut présenter une paroi interne (15) sensiblement cylindrique.

Selon une variante de réalisation actuellement préférée, ledit connecteur (10) est muni d'un système de fermeture (16) dans son(ses) extrémité(s) supérieure (11) et/ou inférieure (12), permettant la connexion étanche entre deux contenants (2), (3).

Selon un mode de réalisation actuellement préféré, ledit système de fermeture (16) est un moyen de fermeture mécanique, ledit système étant rendu étanche par l'ajout d'un joint d'étanchéité (17) placé entre la surface constituée par une desdites extrémités (11) et (12) dudit connecteur (10) et la surface constituée par l'extrémité de l'ouverture desdits contenants (2) et (3). Ledit contenant (2) ou (3) peut être tout réacteur ou fût susceptible de contenir au moins un produit pulvérulent.

En particulier, ledit contenant (2) ou (3) peut être un manchon ou une poche en plastique.

Selon l'invention, en particulier, ledit connecteur (10) peut être réalisé en matière plastique, de préférence en polyéthylène ou polypropylène.

Selon une variante de réalisation, ledit connecteur (10) peut être fabriqué en tout ou partie par moulage.

Selon une variante de réalisation particulière, ledit connecteur (10) peut être constitué d'une gaine souple, sur laquelle lesdits conduits d'arrivée (20) et d'évacuation (30) de fluide sont greffés, notamment par soudage et/ou perçage dudit connecteur (10).

Ainsi, ledit connecteur (10) peut avantageusement s'adapter de manière aisée à tout diamètre, selon les diamètres respectifs des extrémités des contenants (2), (3) qui lui sont reliés.

Selon son second objet, et en particulier en référence aux figures 5 et 6 annexées, la présente invention couvre aussi une installation (100) comprenant le dispositif tel que défini précédemment, caractérisé en ce que lesdits conduits d'arrivée de fluide (20) sont configurés pour être alimentés au moyen d'une pompe (100) ou d'un compresseur, et en ce que ledit conduit d'évacuation de fluide (30) est relié à un tuyau (41) laissé ouvert sur l'environnement extérieur.

Avantageusement, ladite installation peut encore comporter un système d'aspiration, qui est relié audit conduit d'évacuation (30) par le tuyau (41).

Selon une variante de réalisation particulière actuellement préférée, représentée sur la figure 6 annexée, ladite installation peut comprendre en outre, en aval de ladite pompe (100) ou dudit compresseur, un système de deux turbines (130) reliées par un axe, la première turbine (131) étant entraînée par le flux d'alimentation en fluide desdits conduits d'arrivée de fluide (20), et la seconde turbine (132) permettant de créer un vide réalisant l'évacuation dudit fluide par ledit au moins un conduit d'évacuation de fluide (30). Ledit système de deux turbines peut être réalisé en matière plastique, de préférence en polyéthylène ou polypropylène. De manière préférée, et comme représenté sur les figures 5 et 6 annexées, ledit conduit d'évacuation (30) est relié en outre à un filtre à poussière (120) en amont du rejet des fluides dans l'atmosphère.

Selon le mode de réalisation actuellement préféré du dispositif représenté, ledit connecteur est d'un diamètre de 100 mm, lesdits conduits d'arrivée de fluide sont d'un diamètre de 8 à 15 mm, et ledit conduit d'évacuation de fluide est d'un diamètre de 15 à 25 mm.

Selon son troisième objet, et en particulier en référence aux figures 5 à 8 annexées, la présente invention couvre également un procédé de dépoussiérage dans le cadre de transfert de produits pulvérulents d'un premier contenant (2) à un second contenant (3) caractérisé en ce qu'il comprend les étapes suivantes :
a) la provision d'un dispositif (1) tel que défini précédemment ;
b) on réalise la connexion en amont et en aval dudit dispositif (1) aux premier contenant (2) et second contenant (3) dudit produit pulvérulent ;
c) on alimente avec un flux de fluide sous pression lesdits conduits d'arrivée (20) de fluide pour réaliser la formation d'un flux cyclonique dudit fluide au sein dudit connecteur (10) entraînant avec lui tout produit pulvérulent, restant sur la paroi interne (15) ou en amont ou en aval dudit connecteur (10) ;
d) on réalise l'évacuation dudit fluide ainsi que dudit produit pulvérulent par au moins un conduit d'évacuation (30) de fluide.

Selon l'invention, de manière préférée, et comme représenté sur la figures 7 annexée, l'étape b) est réalisée en connectant ledit dispositif (1) à des manchons (2') et (3') respectivement fixés aux contenants initial (2) et final (3), et en fermant l'ouverture desdits contenants par des moyens de serrage externes (140) et (140') de type clamps, réalisant ainsi la fermeture des manchons (2') et (3') par pincement. L'ensemble du dispositif (1) muni des manchons (2') et (3') définit un espace clos confiné. Le procédé de dépoussiérage peut être réalisé sous un flux de fluide sous pression alimentant lesdits conduits d'arrivée (20) de fluide dudit dispositif qui peut être un flux de fluide sous haute pression, en particulier sous une pression supérieure à 100 kPa, de préférence sous une pression supérieure à 300 kPa.

Avantageusement, ladite étape d'évacuation peut comprendre un système d'aspiration connecté audit conduit d'évacuation (30) par un tuyau (41).

Selon un mode de réalisation particulière actuellement préférée, ladite étape d'évacuation peut encore comprendre un filtre à poussière (120) en amont du rejet des fluides dans l'atmosphère, connecté audit conduit d'évacuation (30) de fluide par le tuyau (41).

Selon son quatrième objet, et en particulier en référence aux figures 5 à 8 annexées, la présente invention couvre encore un procédé de transfert d'au moins un produit pulvérulent caractérisé en ce qu'il comprend les étapes suivantes :
a) la provision d'un dispositif (1) tel que défini précédemment ;
b) on réalise l'approvisionnement du premier contenant (2) dudit au moins un produit pulvérulent à transférer ;
c) on réalise la connexion en amont dudit dispositif (1) audit premier contenant (2) ;
d) on réalise la connexion en aval dudit dispositif (1) au second contenant (3) destiné à recevoir ledit au moins un produit pulvérulent transféré ;
e) on réalise le transfert dudit au moins un produit pulvérulent dudit premier contenant (2) vers ledit second contenant (3).

Selon l'invention, de manière préférée, et comme représenté sur la figures 8 annexée, les étapes c) et d) sont réalisées en connectant ledit dispositif (1) à des manchons (2') et (3') respectivement fixés aux contenants initial (2) et final (3).

Selon une première variante de réalisation, ledit dispositif (1) prévu, comprenant lesdits conduits d'arrivée (20) de fluide et ledit conduit d'évacuation (30) de fluide, ne comporte aucune alimentation en fluide desdits conduits (20), (30) au cours du transfert dudit au moins un produit pulvérulent, pression.

Selon une seconde variante de réalisation, ledit procédé comporte en outre une étape d'alimentation en fluide desdits conduits d'arrivée (20) de fluide dudit dispositif (1), par un flux de fluide sous pression, ledit au moins un conduit d'évacuation (30) restant fermé pendant toute l'opération. Le procédé de transfert est réalisé sous un flux de fluide sous pression alimentant lesdits conduits d'arrivée (20) de fluide dudit dispositif (1) qui peut être un flux de fluide sous basse pression, de préférence sous une pression comprise entre 10 kPa et 100 kPa, permettant de créer un anneau dudit fluide au sein dudit connecteur (10) pendant le transfert dudit au moins un produit pulvérulent. Ledit second contenant destiné à recevoir ledit au moins un produit pulvérulent transféré peut être réalisé en un matériau perméable au fluide alimentant lesdits conduits (20), et imperméable audit au moins un produit pulvérulent transféré, ces propriétés émanant soit de la matière dudit contenant final (3), soit du fait de micropores aux diamètres adaptés.

En outre, avantageusement, ledit procédé peut comprendre en outre une étape utilisant le procédé de dépoussiérage dudit dispositif (1) tel que défini précédemment.

Ainsi, lors du dépoussiérage (figure 7) les deux manchons sont fermés par un système de pince permettant de délimiter une cavité étanche autour du dispositif. Lors du transfert de poudre (figure 8), les pinces sont alors retirées laissant libre passage à la poudre.

Selon son dernier objet, la présente invention couvre enfin un procédé de stérilisation utilisant un dispositif (1) ou une installation (100) tel(le) que défini(e) précédemment, caractérisé en ce qu'il comprend l'alimentation desdits conduits d'arrivée (20) de fluide dudit dispositif par un flux sous pression d'un fluide, permettant de stériliser l'ensemble dudit dispositif (1) ou de ladite installation (100) par circulation dudit fluide au sein dudit dispositif (1) ou de ladite installation (100).

En particulier, selon ce dernier objet de l'invention, ledit fluide stérilisant peut être une vapeur fluente, un gaz ou encore l'acide peracétique.

Tous les objets de la présente invention s'appliquent à tout produit pulvérulent qui peut être utilisé en particulier dans le cadre de la fabrication de produits pharmaceutiques, cosmétiques ou agro-alimentaires.

## Revendications

1. Dispositif (1) de dépoussiérage, dans le cadre de transfert de produits pulvérulents d'un premier contenant (2) à un second contenant (3), le dispositif de dépoussiérage formant avec l'ensemble du premier contenant (2) et second contenant (3) un volume de confinement fermé, comprenant, comme moyen de liaison entre le premier contenant (2) et le second contenant (3), un connecteur creux (10) ayant une extrémité supérieure (11) ouverte et une extrémité inférieure (12) ouverte, comportant une paroi latérale (13) entre ses deux extrémités, ladite paroi latérale (13) définissant une paroi externe (14) et une paroi interne (15), **caractérisé en ce que** ledit connecteur (10) est percé de plusieurs conduits d'arrivée (20) de fluide reliés à des tuyaux (40) d'alimentation d'un flux de fluide sous pression et d'au moins un conduit d'évacuation (30) de fluide situé sur tout endroit de la surface constituée par la paroi latérale dudit connecteur, lesdits conduits d'arrivée (20) et d'évacuation (30) étant saillants à ladite paroi externe (14) dudit connecteur (10), et lesdits conduits d'arrivée (20) débouchant sur ladite paroi interne (15) par des orifices (50) permettant l'introduction du fluide, lesdits orifices (50) présentant une orientation les uns par rapport aux autres de façon à créer un flux cyclonique dudit fluide au sein dudit connecteur (10) entrainant avec lui tout produit pulvérulent, restant sur la paroi interne (15) ou en amont ou en aval dudit connecteur (10).

2. Dispositif selon la revendication 1, **caractérisé en ce que** le connecteur creux (10) est connecté à un premier manchon (2') creux souple et écrasable, de jonction entre le premier contenant (2) et l'extrémité supérieure (11) ouverte, et à un second manchon (3') creux souple et écrasable, de jonction entre le second contenant (3) et l'extrémité inférieure (12) ouverte, afin de permettre un confinement fermé d'un volume réduit par écrasement du premier manchon et du second manchon lors d'opérations de nettoyage.

3. Dispositif selon la revendication 1 ou 2, **caractérisé en ce que** ledit connecteur (10) présente une paroi interne (15) sensiblement cylindrique et certains desdits conduits d'arrivée (20) débouchent sur la paroi interne (15) dudit connecteur (10) selon une orientation tangentielle à ladite paroi, et sont orientés, indépendamment ou en combinaison :
- vers le haut, avec un angle θ1 compris entre 20° et 60° par rapport au plan dudit connecteur (10), défini par le plan de l'extrémité supérieure (11) ouverte;
- vers le bas, avec un angle θ1 compris entre 20° et 60° par rapport au plan dudit connecteur (10).

4. Dispositif selon l'une des revendications 1 à 3, **caractérisé en ce que** lesdits conduits d'arrivée du fluide (20) sont arrangés autour dudit connecteur de façon antisymétrique par rapport à l'axe de révolution dudit connecteur, pour permettre l'obtention d'une dynamique du flux cyclonique optimale, et ainsi permettre un dépoussiérage optimal des parois visées.

5. Dispositif selon l'une des revendications 1 à 4, **caractérisé en ce que** ledit connecteur (10) est muni d'un système de fermeture (16) dans son extrémité supérieure (11) et/ou son extrémité inférieure (12), permettant la connexion étanche entre le premier contenant (2) et le second contenant (3).

6. Dispositif selon la revendication 5, **caractérisé en ce que** ledit système de fermeture (16) est le soudage dudit connecteur (10) dans son extrémité supérieure (11) ou inférieure (12) audit premier contenant (2) ou second contenant (3) situé en amont dudit connecteur (10).

7. Dispositif selon l'une des revendications 1 à 6, **caractérisé en ce que** ledit connecteur (10) est réalisé en matière plastique, de préférence en polyéthylène ou polypropylène, lui conférant un caractère jetable.

8. Dispositif selon l'une des revendications 1 à 7, **caractérisé en ce que** ledit connecteur (10) est constitué d'une gaine, sur laquelle lesdits conduits d'arrivée (20) et d'évacuation (30) de fluide sont greffés, notamment par soudage et/ou perçage dudit connecteur (10).

9. Installation (100) comprenant le dispositif selon l'une des revendications 1 à 8, **caractérisé en ce que** lesdits conduits d'arrivée de fluide (20) sont configurés et pour être alimentés au moyen d'une pompe (100) ou d'un compresseur, et **en ce que** ledit au moins un conduit d'évacuation de fluide (30) est relié à un tuyau (41) connecté à un système d'aspiration ou laissé ouvert sur l'environnement extérieur ou encore relié au contenant (3).

10. Procédé de dépoussiérage dans le cadre de transfert de produits pulvérulents d'un premier contenant (2) à un second contenant (3) **caractérisé en ce qu'**il comprend les étapes suivantes :
a) la provision d'un dispositif (1) tel que défini à l'une quelconque des revendications 1 à 8;
b) on réalise la connexion en amont et en aval dudit dispositif (1) aux premier contenant (2) et second contenant (3) dudit produit pulvérulent ;
c) on alimente avec un flux de fluide sous pression lesdits conduits d'arrivée (20) de fluide pour réaliser la formation d'un flux cyclonique dudit fluide au sein dudit connecteur (10) entraînant avec lui tout produit pulvérulent, restant sur la paroi interne (15) ou en amont ou en aval dudit connecteur (10) ;
d) on réalise l'évacuation dudit fluide ainsi que dudit produit pulvérulent par au moins un conduit d'évacuation (30) de fluide qui comprend en outre avantageusement un système d'aspiration connecté audit au moins un conduit d'évacuation (30) de fluide par un tuyau (41).

11. Procédé selon la revendication 10, **caractérisé en ce que** l'étape b) est réalisée en connectant ledit dispositif (1) à des manchons (2') et (3') respectivement fixés aux premier contenant (2) et au second contenant (3), et en fermant l'ouverture desdits contenants par des moyens de serrage externes (140) et (140').

12. Procédé de transfert d'au moins un produit pulvérulent **caractérisé en ce qu'**il comprend les étapes suivantes :
a) la provision d'un dispositif (1) tel que défini à l'une quelconque des revendications 1 à 8 ;
b) on réalise l'approvisionnement du premier contenant (2) dudit au moins un produit pulvérulent à transférer ;
c) on réalise la connexion en amont dudit dispositif (1) audit premier contenant (2) ;
d) on réalise la connexion en aval dudit dispositif (1) au second contenant (3) destiné à recevoir ledit au moins un produit pulvérulent transféré ;
e) on réalise le transfert dudit au moins un produit pulvérulent dudit premier contenant (2) vers ledit second contenant (3).

13. Procédé selon la revendication 12, **caractérisé en ce que** ledit dispositif (1) prévu, comprenant lesdits conduits d'arrivée (20) de fluide et ledit au moins un conduit d'évacuation (30) de fluide, ne comporte aucune alimentation en fluide desdits conduits d'arrivée (20) et d'évacuation (30) au cours du transfert dudit au moins un produit pulvérulent.

14. Procédé selon la revendication 12, **caractérisé en ce qu'**il comporte en outre une étape d'alimentation en fluide desdits conduits d'arrivée (20) de fluide dudit dispositif (1) orientés sensiblement dans le plan dudit connecteur (10), par un flux de fluide sous pression, ledit au moins un conduit d'évacuation (30) restant fermé.

15. Procédé selon la revendication 14, **caractérisé en ce que** ledit flux de fluide sous pression alimentant lesdits conduits d'arrivée (20) de fluide dudit dispositif (1) est un flux de fluide sous basse pression, de préférence sous une pression comprise entre 10 kPa et 100 kPa, permettant de créer un anneau dudit fluide au sein dudit connecteur (10) pendant le transfert dudit au moins un produit pulvérulent.

16. Procédé selon l'une des revendications 12 à 15, **caractérisé en ce que** les étapes c) et d) sont réalisées en connectant ledit dispositif (1) à des manchons (2') et (3') respectivement fixés aux premier contenant (2) et second contenant (3).

17. Procédé de stérilisation utilisant le dispositif (1) selon l'une quelconque des revendications précédentes 1 à 8, ou l'installation selon la revendication 9, **caractérisé en ce qu'**il comprend l'alimentation desdits conduits d'arrivée (20) de fluide dudit dispositif par un flux sous pression d'un fluide, permettant de stériliser l'ensemble dudit dispositif (1) ou de ladite installation (100) par circulation dudit fluide au sein dudit dispositif (1) ou de ladite installation (100).

18. Procédé selon la revendication 17, **caractérisé en ce que** ledit fluide stérilisant est une vapeur fluente, un gaz ou encore l'acide peracétique.

## Patentansprüche

1. Vorrichtung (1) zum Entstauben im Rahmen des Überführens von pulverförmigen Produkten von einem ersten Behälter (2) zu einem zweiten Behälter (3), wobei die Entstaubungsvorrichtung mit der Anordnung aus erstem Behälter (2) und zweitem Behälter (3) ein geschlossenes Umschließungsvolumen bildet, umfassend einen hohlen Verbinder (10) mit einem offenen oberen Ende (11) und einem offenen unteren Ende (12), mit einer Seitenwand (13) zwischen seinen beiden Enden, als Verbindungsmittel zwischen dem ersten Behälter (2) und dem zweiten Behälter (3), wobei die Seitenwand (13) eine Außenwand (14) und eine Innenwand (15) definiert, **dadurch gekennzeichnet, dass** der Verbinder (10) von mehreren Fluideinlassleitungen (20), die mit Rohren (40) zum Zuführen eines Druckfluidflusses verbunden sind, und von wenigstens einer Fluidabführleitung (30), die an jedweder Stelle der durch die Seitenwand des Verbinders gebildeten Oberfläche gelegen ist, durchbohrt ist, wobei die Einlass- (20) und Abführleitungen (30) an der Außenwand (14) des Verbinders (10) überstehen, und wobei die Einlassleitungen (20) an der Innenwand (15) über Öffnungen (50), die das Einleiten des Fluids ermöglichen, ausmünden, wobei die Öffnungen (50) eine Ausrichtung zueinander aufweisen, um einen zyklonalen Fluss des Fluids innerhalb des Verbinders (10) zu erzeugen, der jedwedes pulverförmige Produkt, das an der Innenwand (15) oder stromauf oder stromab von dem Verbinder (10) verbleibt, mit sich mitnimmt.

2. Vorrichtung nach Anspruch 1, **dadurch gekennzeichnet, dass** der hohle Verbinder (10) an eine erste flexible und zusammendrückbare Hohlmuffe (2') zur Verbindung zwischen dem ersten Behälter (2) und dem offenen oberen Ende (11) sowie an eine zweite flexible und zusammendrückbare Hohlmuffe (3') zur Verbindung zwischen dem zweiten Behälter (3) und dem offenen unteren Ende (12) angeschlossen ist, um eine geschlossene Umschließung eines reduzierten Volumens durch Zusammendrücken der ersten Muffe und der zweiten Muffe während Reinigungsvorgängen zu ermöglichen.

3. Vorrichtung nach Anspruch 1 oder 2, **dadurch gekennzeichnet, dass** der Verbinder (10) eine im Wesentlichen zylindrische Innenwand (15) aufweist und einige der Einlassleitungen (20) an der Innenwand (15) des Verbinders (10) in einer zu der Wand tangentialen Ausrichtung ausmünden und unabhängig oder in Kombination:
- nach oben mit einem Winkel θ1 zwischen 20° und 60° gegenüber der Ebene des Verbinders (10), welche durch die Ebene des offenen oberen Endes (11) definiert ist,
- nach unten mit einem Winkel θ1zwischen 20° und 60° gegenüber der Ebene des Verbinders (10),
ausgerichtet sind.

4. Vorrichtung nach einem der Ansprüche 1 bis 3, **dadurch gekennzeichnet, dass** die Fluideinlassleitungen (20) um den Verbinder in Bezug auf die Rotationsachse des Verbinders antisymmetrisch angeordnet sind, um das Erreichen einer Dynamik des optimalen zyklonalen Flusses zu ermöglichen und somit ein optimales Entstauben der ins Auge gefassten Wände zu ermöglichen.

5. Vorrichtung nach einem der Ansprüche 1 bis 4, **dadurch gekennzeichnet, dass** der Verbinder (10) mit einem Schließsystem (16) in seinem oberen Ende (11) und/oder seinem unteren Ende (12) ausgestattet ist, welches die dichte Verbindung zwischen dem ersten Behälter (2) und dem zweiten Behälter (3) ermöglicht.

6. Vorrichtung nach Anspruch 5, **dadurch gekennzeichnet, dass** das Schließsystem (16) das Anschweißen des Verbinders (10) in seinem oberen (11) oder unteren Ende (12) an den ersten Behälter (2) oder zweiten Behälter (3), stromauf des Verbinders (10) gelegen, ist.

7. Vorrichtung nach einem der Ansprüche 1 bis 6, **dadurch gekennzeichnet, dass** der Verbinder (10) aus Kunststoff, vorzugsweise aus Polyethylen oder Polypropylen, der ihm einen Einwegcharakter verleiht, ausgebildet ist.

8. Vorrichtung nach einem der Ansprüche 1 bis 7, **dadurch gekennzeichnet, dass** der Verbinder (10) von einer Hülle gebildet ist, an der die Einlass- (20) und Abführleitungen (30) eingesetzt sind, insbesondere durch Schweißen und/oder Durchbohren des Verbinders (10).

9. Anlage (100), umfassend die Vorrichtung nach einem der Ansprüche 1 bis 8, **dadurch gekennzeichnet, dass** die Fluideinlassleitungen (20) dazu ausgelegt sind, mittels einer Pumpe (100) oder eines Kompressors beaufschlagt zu werden, und dass die wenigstens eine Fluidabführleitung (30) mit einem Rohr (41) verbunden ist, das an ein Absaugsystem angeschlossen oder zur Außenumgebung offen gelassen oder aber mit dem Behälter (3) verbunden ist.

10. Verfahren zum Entstauben im Rahmen des Überführens von pulverförmigen Produkten von einem ersten Behälter (2) zu einem zweiten Behälter (3), **dadurch gekennzeichnet, dass** es die folgenden Schritte umfasst:
a) Bereitstellen einer Vorrichtung (1) wie sie in einem der Ansprüche 1 bis 8 definiert ist,
b) Herstellen der Verbindung stromauf und stromab der Vorrichtung (1) mit dem ersten Behälter (2) und dem zweiten Behälter (3) des pulverförmigen Produktes,
c) Beaufschlagen der Fluideinlassleitungen (20) mit einem Druckfluidfluss, um die Ausbildung eines zyklonalen Flusses des Fluids innerhalb des Verbinders (10) zu vollziehen, der jedwedes pulverförmige Produkt, das an der Innenwand (15) oder stromauf oder stromab des Verbinders (10) verbleibt, mit sich mitzunehmen,
d) Durchführen des Ableitens des Fluids sowie des pulverförmigen Produktes über wenigstens eine Fluidabführleitung (30), die ferner vorteilhafterweise ein Absaugsystem, welches über ein Rohr (41) mit der wenigstens einen Fluidabführleitung (30) verbunden ist, umfasst.

11. Verfahren nach Anspruch 10, **dadurch gekennzeichnet, dass** der Schritt b) dadurch vollzogen wird, dass die Vorrichtung (1) an Muffen (2') und (3'), die an dem ersten Behälter (2) bzw. an dem zweiten Behälter (3) befestigt sind, angeschlossen wird und dass die Öffnung der Behälter über äußere Klemmmittel (140) und (140') verschlossen wird.

12. Verfahren zum Überführen wenigstens eines pulverförmigen Produktes, **dadurch gekennzeichnet, dass** es die folgenden Schritte umfasst:
a) Bereitstellen einer Vorrichtung (1) wie sie in einem der Ansprüche 1 bis 7 definiert ist,
b) Versorgen des ersten Behälters (2) mit dem wenigstens einen zu überführenden pulverförmigen Produkt,
c) Herstellen der Verbindung stromauf der Vorrichtung (1) mit dem ersten Behälter (2),
d) Herstellen der Verbindung stromab der Vorrichtung (1) mit dem zweiten Behälter (3), der dazu bestimmt ist, das wenigstens eine überführte pulverförmige Produkt aufzunehmen,
e) Durchführen des Überführens des wenigstens einen pulverförmigen Produktes von dem ersten Behälter (2) zu dem zweiten Behälter (3).

13. Verfahren nach Anspruch 12, **dadurch gekennzeichnet, dass** die vorgesehene Vorrichtung (1), welche die Fluideinlassleitungen (20) und die wenigstens eine Fluidabführleitung (30) umfasst, keine Fluidbeaufschlagung der Einlass- (20) und Abführleitungen (30) im Laufe des Überführens des wenigstens einen pulverförmigen Produktes umfasst.

14. Verfahren nach Anspruch 12, **dadurch gekennzeichnet, dass** es ferner einen Schritt zur Fluidbeaufschlagung der im Wesentlichen in der Ebene des Verbinders (10) ausgerichteten Fluideinlassleitungen (20) der Vorrichtung (1) mit einem Druckfluidfluss umfasst, wobei die wenigstens eine Fluidabführleitung (30) verschlossen bleibt.

15. Verfahren nach Anspruch 14, **dadurch gekennzeichnet, dass** der Druckfluidfluss, welcher die Fluideinlassleitungen (20) der Vorrichtung (1) versorgt, ein Niederdruckfluidfluss, vorzugsweise unter einem Druck zwischen 10 kPa und 100 kPa ist, der ermöglicht, einen Ring des Fluids innerhalb des Verbinders (10) während des Überführens des wenigstens einen pulverförmigen Produktes zu erzeugen.

16. Verfahren nach einem der Ansprüche 12 bis 15, **dadurch gekennzeichnet, dass** die Schritte c) und d) dadurch vollzogen werden, dass die Vorrichtung (1) mit Muffen (2') und (3'), welche an dem ersten Behälter (2) bzw. an dem zweiten Behälter (3) befestigt sind, verbunden wird.

17. Sterilisationsverfahren, das die Vorrichtung (1) nach einem der vorhergehenden Ansprüche 1 bis 8 oder die Anlage nach Anspruch 9 verwendet, **dadurch gekennzeichnet, dass** es die Beaufschlagung der Fluideinlassleitungen (20) der Vorrichtung mit einem Druckfluss eines Fluids umfasst, der ermöglicht, die gesamte Vorrichtung (1) oder Anlage (100) durch Zirkulation des Fluids innerhalb der Vorrichtung (1) oder der Anlage (100) zu sterilisieren.

18. Verfahren nach Anspruch 17, **dadurch gekennzeichnet, dass** das sterilisierende Fluid ein strömender Dampf, ein Gas oder aber Peressigsäure ist.

## Claims

1. A device (1) for extracting dust in the context of the transfer of pulverulent products from a first container (2) to a second container (3), the dust extraction device forming with the combination of the first container and of the second container a closed containment volume comprising, by way of means of connection between the first container (2) and the second container (3), a hollow connector (10) having an open top end (11) and an open bottom end (12), comprising a side wall (13) between its two ends, said side wall (13) defining an external wall (14) and an internal wall (15), **characterized in that** said connector (10) is pierced with several fluid inlet pipes (20) connected to hoses (40) fed with a stream of pressurized fluid and also pierced with at least one fluid discharge pipe (30) located on any location of the surface constituted by the side wall of the connector, said inlet (20) and discharge (30) pipes projecting from said external wall (14) of said connector (10), and said inlet pipes (20) opening onto said internal wall (15) via orifices (50) that allow the fluid to be introduced, said orifices (50) being oriented relative to one another in such a way as to cause said fluid to flow in a cyclone within said connector (10), carrying with it any pulverulent product that remains on the internal wall (15) and/or upstream and/or downstream of said connector (10).

2. The device as claimed in claim 1, **characterized in that** the hollow connector (10) is connected to a flexible and crushable first hollow sleeve tube (2') forming the connection between the first container (2) and the open top end (11), and to a flexible and crushable second hollow sleeve tube (3') forming the connection between the second container (3) and the open bottom end (12), so as to allow closed containment of a small volume by crushing the first sleeve tube and the second sleeve tube during cleaning operations.

3. The device as claimed in claim 1 or 2, **characterized in that** said connector (10) has a substantially cylindrical internal wall (15) and some of said inlet pipes (20) open onto the internal wall (15) of said connector (10) at an orientation that is tangential to said wall and are oriented, independently or in combination:
- upward at an angle θ₁ comprised strictly between 20° and 60° with respect to the plane of said container (10), defined by the plane of the open top end (11);
- downward at an angle θ₁ strictly comprised between 20° and 60° with respect to the plane of said connector (10).

4. The device as claimed in one of claims 1 to 3, **characterized in that** said fluid inlet pipes (20) are arranged around the connector in anti-symetric way with respect to the revolution axis of said connector to allow obtention of a dynamic of cyclonic flow which is optimal and thus enable an optimal undusting of the sought walls

5. The device as claimed in one of claims 1 to 4, **characterized in that** said connector (10) is equipped with a closure system (16) in its top end (11) and/or bottom end (12), allowing the fluid tight connection between the first container (2) and the second container (3).

6. The device as claimed in claim 5, **characterized in that** said closure system (16) is the welding of said connector (10) at its top end (11) or bottom end (12) to said first container (2) or said second container (3) situated upstream of said connector (10).

7. The device as claimed in one of claims 1 to 6, **characterized in that** said connector (10) is made of a plastic, preferably of polyethylene or polypropylene, giving it a disposable nature.

8. The device as claimed in one of claims 1 to 7, **characterized in that** said connector (10) consists of a sleeve to which said fluid inlet (10) and discharge (30) pipes are grafted, notably by welding and/or piercing of said connector (10).

9. An installation (100) comprising the device as claimed in one of claims 1 to 8, **characterized in that** said fluid inlet pipes (20) are configurated to be fed by means of a pump (100) or of a compressor and **in that** said at least one fluid discharge pipe (30) is connected to a hose (41) connected to a suction system or left open to the external environment or, alternatively, connected to the container (3).

10. A method for extracting dust in the context of the transfer of pulverulent products from a first container (2) to a second container (3), **characterized in that** it comprises the following steps:
a) providing a device (1) as defined in any one of claims 1 to 8;
b) connecting said device (1) upstream and downstream to the first container (2) and to the second container (3) for said pulverulent product;
c) feeding said fluid inlet pipes (20) with a stream of pressurized fluid in order to cause said fluid to flow in a cyclonic way within said connector (10), carrying with it any pulverulent product that remains on the internal wall (15) or upstream or downstream of said connector (10);
d) discharging said fluid and said pulverulent product via at least one fluid discharge pipe (30) which furthermore comprises advantageously a suction system connected to said at least one fluid discharge pipe (30) by a hose (41).

11. The method as claimed in claim 14, **characterized in that** step b) is performed by connecting said device (1) to sleeve tubes (2') and (3') fixed respectively to the first container (2) and to the second container (3), and by closing the opening of said containers using external clamping means (140) and (140').

12. A method of transferring at least one pulverulent product, **characterized in that** it comprises the following steps:
a) providing a device (1) as defined in any one of claims 1 to 8;
b) supplying the initial container (2) with said at least one pulverulent product that is to be transferred;
c) connecting said device (1) upstream to said initial container (2);
d) connecting said device (1) downstream to the final container (3) intended to receive said at least one pulverulent product that has been transferred;
e) transferring said at least one pulverulent product from said initial container (2) to said final container (3).

13. The method as claimed in claim 12, **characterized in that** said intended device (1), comprising said fluid inlet pipes (20) and said at least one fluid discharge pipe (30), has no fluid fed to said inlet pipes (20) and outlet pipes (30) during the transfer of said at least one pulverulent product.

14. The method as claimed in claim 12, **characterized in that** it further comprises a step of feeding fluid to said fluid inlet pipes (23) of said device (1) oriented substantially in the plane of said connector (10), with a stream of pressurized fluid, said at least one discharge pipe (30) remaining closed.

15. The method as claimed in claim 14, **characterized in that** said stream of pressurized fluid fed to said fluid inlet pipes (20) of said device (1) is a stream of fluid under low pressure, preferably under a pressure of between 10 kPa and 100 kPa, enabling to create an annulus of said fluid within said connector (10) while said at least one pulverulent product is being transferred.

16. The method as claimed in one of claims 12 to 15, **characterized in that** steps c) and d) are performed by connecting said device (1) to sleeve tubes (2') and (3') fixed respectively to the first container (2) and to the second container (3).

17. A method of sterilizing using the device (1) according to any one of the claims 1 to 8, or the installation (100) according to claim 9, **characterized in that** it comprises feeding said fluid inlet pipes (20) of said device with a pressurized stream of a fluid so that the entirety of said device (1) or said installation (100) can be sterilized by passing said fluid through said device (1) or said installation (100).

18. The method as claimed in claim 17, **characterized in that** said sterilizing fluid is a flowable vapor, a gas or again peracetic acid.
